# EUROPEAN PATENT APPLICATION

(11) **EP 1 278 142 A2**
(43) Date of publication of application: **22.01.2003**
(21) Application number: 01310924.4
(22) Date of filing: 28.12.2001
(51) Int. Cl.: G06F 17/60

(54) **Method and system for network based self-help service**

(30) Priority: 17.07.2001 CN 01120469; 13.09.2001 CN 01131067
(71) Applicant: Tianjin Nankai Guard Group Co. Ltd., Tianjin (CN)
(72) Inventor: Li, Mingzhi, Tianjin (CN); Shen, Shiyi, Tianjin (CN); An, Shusen, Tianjin (CN); Zhang, Zhiguang, Tianjin (CN); Wang, Liansheng, Tianjin (CN); Yao, Ran, Tianjin (CN); Wang, Rui, Tianjin (CN); Dong, Liuhuan, Tianjin (CN)
(74) Representative: Cummings, Sean Patrick

(57) **Abstract**

The present invention relates to a method and system of electronic data processing based self-help service, which is comprised of a network management center and customer terminals connected via network communication system. The network mode of the system can be W/B (Web/Browser) or C/S (Client/Sever). The network management center includes a hardware portion of network center servers, auxiliary PCs or the embedded operation system and network equipment--includes network cards inside the servers and network cables; and a software portion of an information data database, a network management database, an electronic business database, a management software, a encrypt key authentication and information security software package including a firewall or VPN system. The customer terminals include a customer terminal host and a plurality of customer terminal slaves constructed by way of building block with different service content. Said network communication system is made up of the Internet, wired and / or wireless local area network as well as computer buses. The present invention provides comprehensive multifunction self-help services to users, which facilitates users and beautifies environment and increases level of service intelligence.

## Description

### TECHNIQUE FIELD

The present invention relates to an electronic data processing equipment for self-help services, and to a method for operating said equipment.

### BACKGROUND

Self-help service is a burgeoning industry in the human life. The equipment of current self-help service, however, only provides a mono-content service. For example, NOVELTY-A communication network customer service system disclosed by US6177932 and BR9902989 has one or a plurality of terminal servers that are distributed. Wherein each terminal server provides only a single service, e.g. a single financial service, a single information inquiry service, a single self-help settlement service, a single retail service or a single automated player etc. CN1236929A disclosed an ordering system by which customers can select food listed on the menu in a self-help cafeteria using a terminal PC, it provides only one single service again. CN2307133Y disclosed a mono-function of self-help information inquiry machine. The payment method of the self-service equipment in the prior art are also unitary, such as the IC card self-help network terminal retail kiosk disclosed by CN2386122Y. "ZhengZhou self-help bank network in operation" was reported by the Xinhua Daily News on 99, 2(11). The payment method of "Self-help Post System" (Yearly Project No. 99020221) reported by China Scientific and Technological Achievement Data Ver. 2000, are all by way of reading card. Most roadside dispensers accept only coins.

Said the single service content and single payment method of the self-help equipment often makes customers feel inconvenient.

### SUMMARY OF THE INVENTION

The object of the present invention is to provide a system and operating method for network based self-help service constructed with building block customer terminals combining a plurality of service contents and a plurality of payment means.

The present invention is realized as follows: a network system based self-help service is constructed with a network management center and customer terminals connected by means of a network communication system. The network mode of the system can be W/B (Web/Browser) or C/S (Client/Sever). Wherein, said the network management center comprises a hardware portion of network center servers, auxiliary PCs or the embedded operation system and network equipment---including network cards within the server and network cables: and a software portion of an information data database, a network management database, an electronic business database, a management software, a encrypt key authentication and information security software package including a firewall or VPN system. The customer terminal includes a customer terminal host and customer terminal slaves. customer terminal slaves are constructed with terminal server cabinets by way of building block, wherein the terminal server cabinets having different service items and content are selected according to the requirements of the users in those areas. Network communication system is made up of the Internet, wired and / or wireless local area network as well as computer buses.

The information data database according to the present invention stores therein all kinds of information specially collected by the present system for the community then and there.

The customer terminal host according to the present invention consists of a PC host, a touch screen display, a keyboard, a communication and control board, a communication and control interface connected with the network management center, a communication and control interface connected with all kinds of gathering machine inside the host cabinet, a paper currency and coin cash receiver, a value storing card reader, a value adding card reader, a small change machine, a telephone and / or mobile phone bank payment module, general purpose computer operating software, host and slave data management software, a communication software system of the network management center and network data safety maintenance software.

The customer terminal slaves according to the present invention are composed by way of building block of 2∼6 cabinets of dispensers and / or card and ticket dispenser and / or information service machines, and may provide 6∼30 items of service contents. Wherein said dispensers are for food dispensers, beverage dispensers or general merchandise dispensers, said card and ticket dispensers are a ticket dispenser, a card dispenser or a combination of them, said information service machines are information inquiry machines, video telephones, printers or duplicating machines, or a combination of them.

The operation method of the network system based self-help service according to the present invention is as follows: (1) customers choose service items, contents and payment methods, (2) the terminal host automatically generates terminal information, and transmits them to the network management center in real time, (3) the network management center receives terminal information, and processing them in a information data database, a network management database or an electronic business database according to different information, (4) the network management center returns the result to the terminal host, (5) the terminal performs settlement according to the payment method chosen by the customer, (6) the terminal host communicates with at least one customer terminal slave, in order to control it or them to provide all kinds of services to customers.

For the operation of the network based service system, the processing procedure of the information data database is: (1) the customer chooses information on the terminal host; (2) payment method is determined; (3) the terminal creates information service request message, and transmits it to the network management center; (4) the network management center extracts corresponding information from the information data database, and returns it to the terminal host; (5) the customer terminal host performs settlement according to the payment method chosen by the customer; (6) the terminal slave provides to the customer with information service.

In the method for the operation of said network system based self-help service, the procedure for the processing of the network management database is: (1) the terminal host creates real time terminal messages, which includes information data about merchandise remained, amount of currency remained, merchandise consumption request and operating status; (2) the terminal slave transmits said information to the network management center; (3) the network management center modifies the original data in the network management database, and sends the result back to the terminal host; (4) the customer terminal performs settlement according to the payment method chosen by the customer; (5) the terminal slave provides to the customer with merchandise service.

In the method for the operation of said network system based self-help service, the procedure for the processing in the electronic business database is: (1) the terminal host modifies the value adding card information; (2) sending the modified value adding card information to the network management center; (3) the network management center correspondingly modifies data in the electronic business database, and sends the result of the processing back to the terminal host; (4) the terminal host performs settlement; (5) the terminal slave provides to the customer with service.

In the method for the operation of the network system based self-help service, the payment and settlement procedure is as follows: (1) the customer chooses the method for the payment; (2) entering cash payment procedure if the customer chooses cash payment; (3) entering value storing card payment procedure if value storing card payment method is chosen; (4) entering the value adding payment procedure if value adding card payment method is chosen.

During said payment and settlement procedure, the procedure for the cash payment is: (1) inputting cash to the cash receiver; (2) verifying the amount of cash received; (3) making sure that the amount of cash input is not less than the amount that should be paid; (4) the terminal slave provides service and the small change machine gives change.

During the procedure of payment and settlement, the procedure for the payment using value adding card is: (1) reading card in the value storing card reader; (2) authenticating the card; (3) making sure that the amount remaining in the card is not less than that should be paid; (3-1) determining whether the card should be refilled, if the amount in the card is less than that should be paid; (3-2) inputting cash into the cash receiver, to refill the card, so as to the amount in the card is more than that should be paid; (4) performing settlement, outputting the card; (5) the terminal slave providing service.

In the method for the operation of said network system based self-help service, the procedure for the control of the communication between the terminal host and the slave is as follows: (1) the terminal host distributing service request messages for different service items and contents to different slaves; (2) the terminal slave checking the category and quantity of merchandise, and receiving the instruction signifying that payment has been completed and service may be provided; (3) the terminal slave controlling the merchandise output cabinet output merchandise, and sending information about the category and quantity of the sold merchandises or the time of information service back to the terminal host; (4) the terminal host controlling the small change machine give change or the card reader output card; (5) the terminal host modifying the database for remained merchandises and the database for remained currency; (6) the terminal host sending modified data to the network management center.

Comparing with the prior art technique, the present invention is advantageous in that: the network system based self-help service according to the present invention integrates self-help industry, network information and electronic business into a whole, making different techniques of three areas assembled together. The user can choose any kind or any kinds of payment methods using any one customer terminal to receive a plurality of self-help service items, providing the user with a kind of comprehensive multifunction self-help service. This will certainly provide the user with convenience, beautify the environment, improving intelligent service, and is a new growth of the self-help industry development.

### BRIEF DESCRIPTION OF THE DRAWINGS

Figure 1 is a graph illustrating the network system based self-help service as a whole according to the present invention.
Figure 2 is a block diagram illustrating the structure of the network management center according to the present invention.
Figure 3 is a block diagram illustrating the constitutes of the customer terminal according to the present invention.
Figure 4 is a graph illustrating the structure of the panel of the customer terminal according to the present invention.
Figure 5 is a graph illustrating the dispenser in the customer terminal slave according to the present invention.
Figure 6 is a graph illustrating the communication and control method according to the present invention.
Figure 7 is a block diagram illustrating the network communication system according to the present invention.
Figure 8 is a diagram illustrating the wiring of the communicator and controller according to the present invention.
Figure 9 is a flowchart illustrating the operation of the network system based self-help service.
Figure 10 is a flowchart of the operation of the customer.
Figure 11 is a flowchart illustrating the payment operation.
Figure 12 is a flowchart illustrating the controlling of the communication between the customer terminal host and slave.

### EMBODIMENTS OF THE PRESENT INVENTION

In the following description, for purpose of explanation and not limitation, specific details about the embodiments of the present invention are set forth.

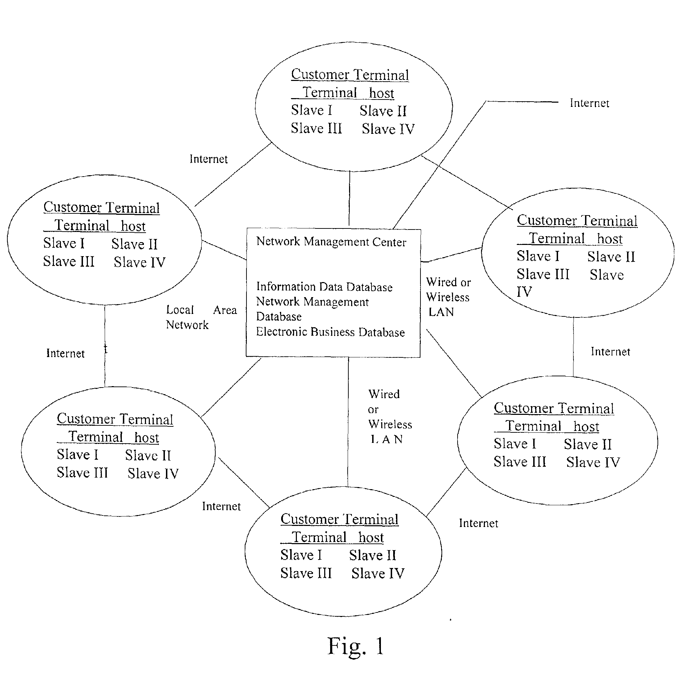

Figure 1 shows that the network system based self-help service according to the present invention connects network management center with six customer terminals using the Internet and wired and / or wireless local area network for data exchange. For the connection of local area network, wired connection and / or wireless connection is chosen for different situations. The network management center is comprised of an information service center, a data management center and an electronic business center. The network management center is connected with the Internet using network address, and provides communication and services.

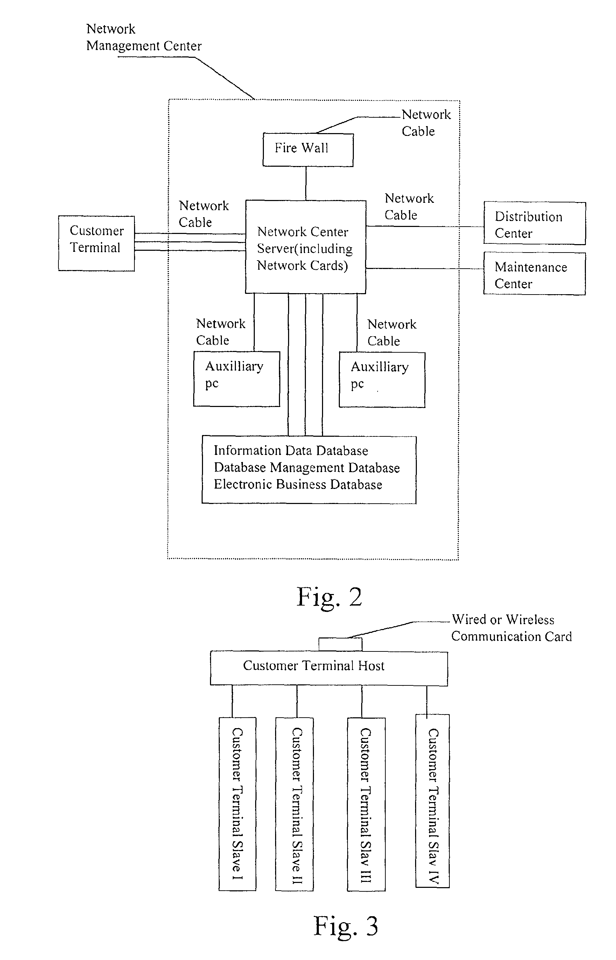

Figure 2 shows the network management center according to the present invention which is comprised of a hardware portion: a network center server, two auxiliary PCs or the embedded operation system, network equipment including network cards within the server and network cables, and a software portion: an information data database, a network management database, an electronic business database, management software, encrypt key authentication and information safety software package including a firewall or VPN system. Said center is connected with customer terminals by means the Internet and / or a local area network, it is also connected with a cargo distribution center and a maintenance center. Information is collected by handmade collection, editing or downloaded from networks, and are classified by means of unified information data database documents.

Figure 3 which shows the construction of the customer terminal illustrates that the customer terminal server cabinet is comprised of a customer terminal host and four customer terminal slaves by way of building block. Wherein the customer terminal slave I is a card dispenser, the customer terminal slave II is a beverage dispenser, the customer terminal slave III is a food dispenser, the customer terminal slave IV is an information server, which may be regarded as a host.

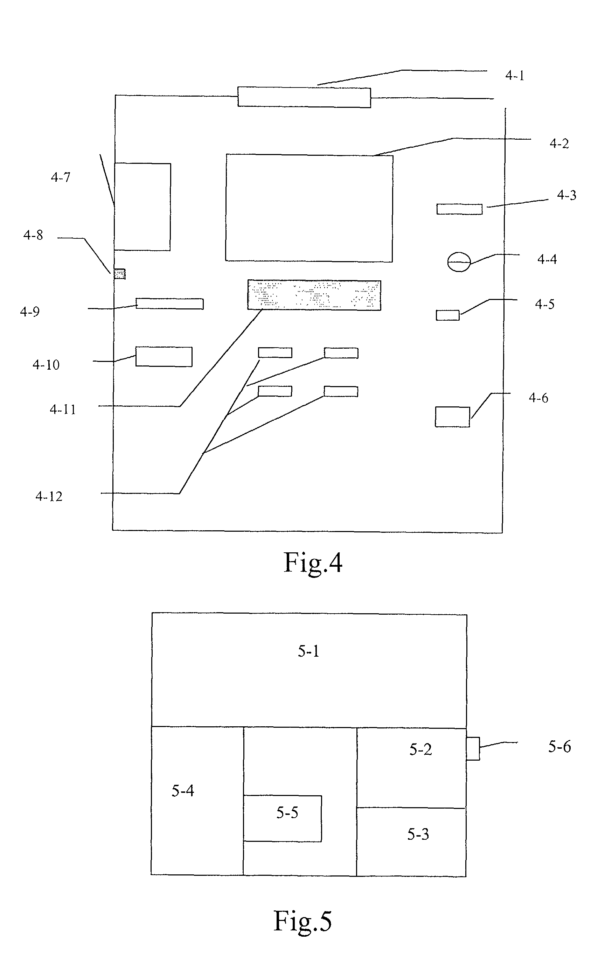

Figure 4 shows the structure of the panel of the customer terminal host. Wherein 4-1 is a communication and control interface connected with the data management center, 4-2 is a touch screen display, which is used to display messages for customer, and is used to start up the service system, 4-3 is an entrance of the paper currency receiver, and is an entrance of the coin receiver, 4-5 is an entrance of the card reader, 4-6 is a small change exit, 4-7 is a place for installation of video telephone, 4-8 is a communication and control interface for connection with the terminal slave, 4-9 is a paper exit of the printer, 4-10 is card value increasing device, 4-11 is a keyboard, which is also used to start up the service system, 4-12 is a card exit of the card dispenser or a ticket exit of the ticket dispenser, there are four of them.

The dispenser of the customer terminal slave may be a food dispenser, a beverage dispenser or a general merchandise dispenser, whose constitute is shown in the Figure 5. Wherein 5-1 is a merchandise storage cabinet, 5-2 is a communication and controller, 5-3 is a driver, 5-4 is a temperature adjuster, 5-5 is a merchandise exit, 5-6 is an interface for interfacing with the host.

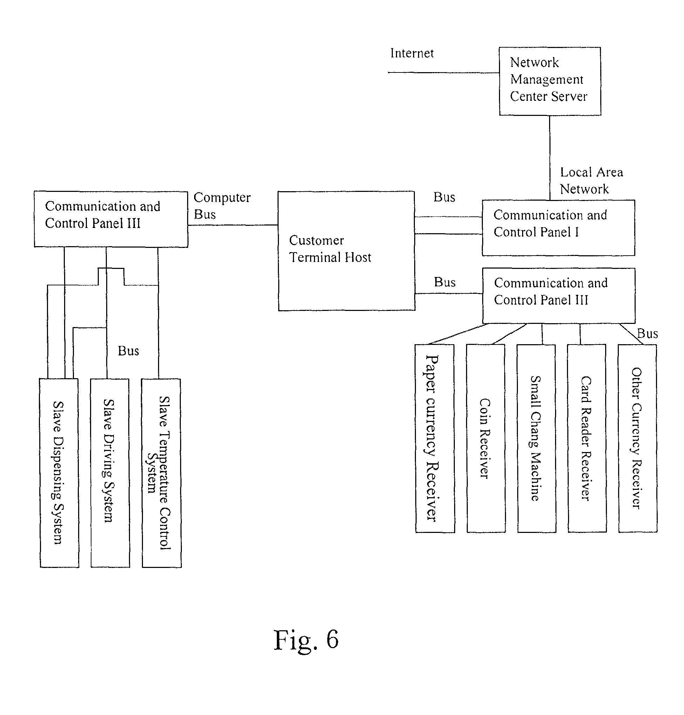

The method for the communication and control of the network communication system according to the present invention is shown in Figure 6, the network (including the Internet and the local area network) between the network management center server and the customer terminal host is formed by means of the communication and control panel I. The customer terminal host is connected with each cash receiver (including a paper currency receiver, a coin receiver, a small change machine, a card reader and other cash receivers) through the communication and control panel II. The customer terminal host is connected with a paying system, an driving system and a temperature control system of the customer terminal slave by means of the communication and control panel III.

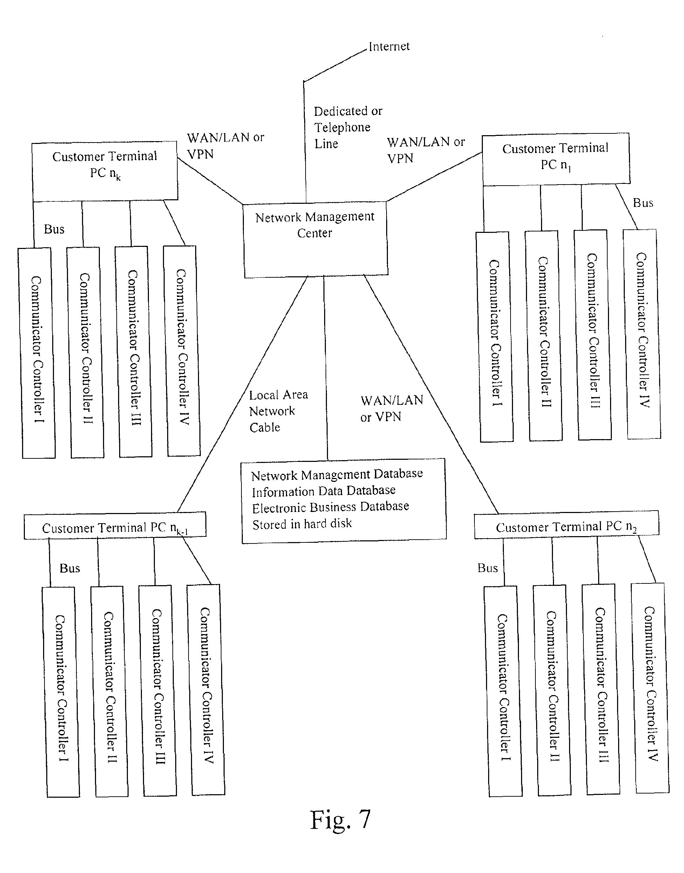

Figure 7 shows the constitutes of the network communication system. The network management center server is connected with the Internet through a dedicated line or a telephone line. The customer terminal PC is connected with the network management center server through a local area network line. The communicator and controller in the customer terminal slave is connected with the customer terminal host through computer bus. A network database, an information data database and an electronic business database is stored in the fixed disk of the network management center server. Figure 7 shows that a network management center of the network self-help service system according to the present invention is connected with K customer terminals. Each customer terminal has a customer terminal host and four customer terminal slaves, constructed by way of building block.

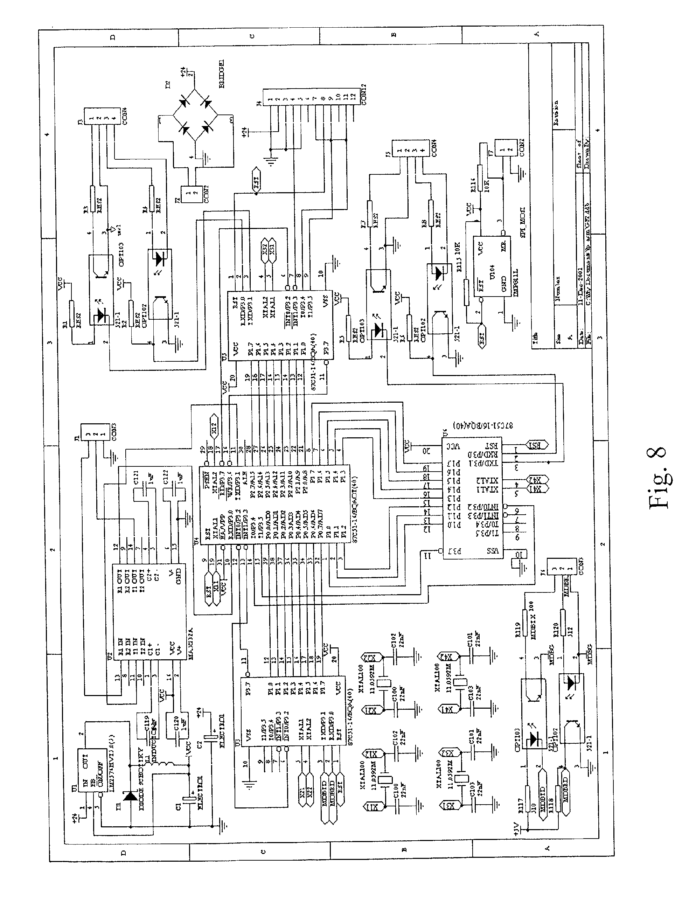

Figure 8 is a diagram of the circuit of the communicator and controller according to the present invention.

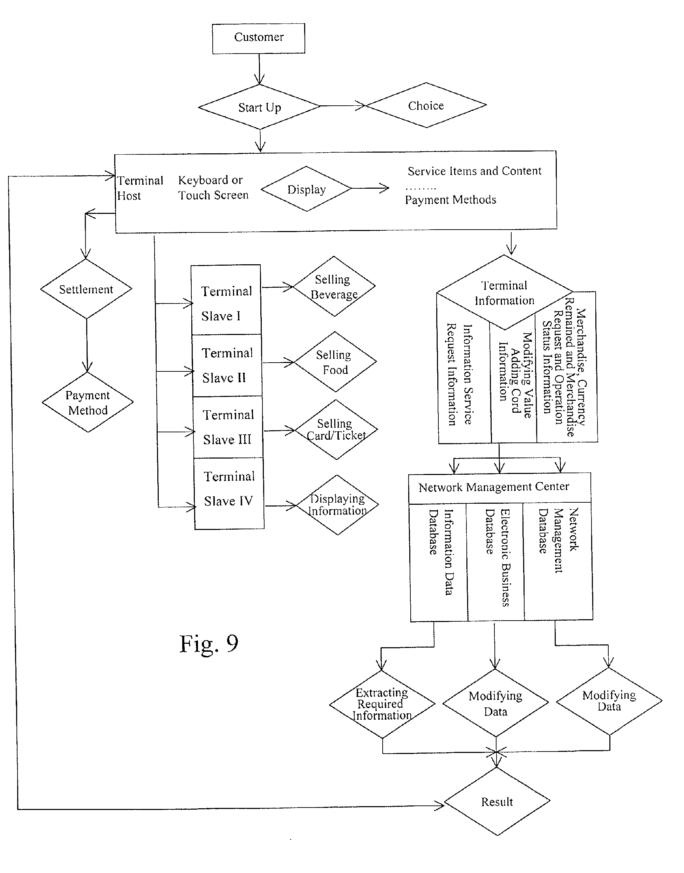

Figure 9 illustrates that the operation of the network self-help service system according to the present invention is as follows: the customer starts the terminal host using the touch screen or the keyboard of the terminal host, the screen of the terminal host will display level by level service items and contents and payment methods. The terminal host transfers the terminal messages including the information service request of the customer, messages about the modification of the value adding card and the remained merchandise, currency, merchandise consumption request and operation status information of the customer terminal through the network communication system to the network management center. The information data database of the network management center processes the information service request message of the customer, and extracts the required information, and transmits it through the network communication system to the terminal host. The electronic business database receives the value adding card modification message sent by the customer terminal host, modify the originally stored data, and sends the modification result back to the customer terminal host. The network management database in the network management center receives the corresponding messages about remained currency, merchandise consumption request and operation status sent by the customer terminal host, modifies the originally stored data, and sends the processing result back to the customer terminal host. After the processing result sent back from the network management center has been received, the customer terminal host performs settlement according to the payment method chosen by the customer, and controls the terminal to output beverage from the slave I, the terminal to output food from the slave II, the terminal to output cards and tickets from the terminal slave III, to provide information service from the slave IV.

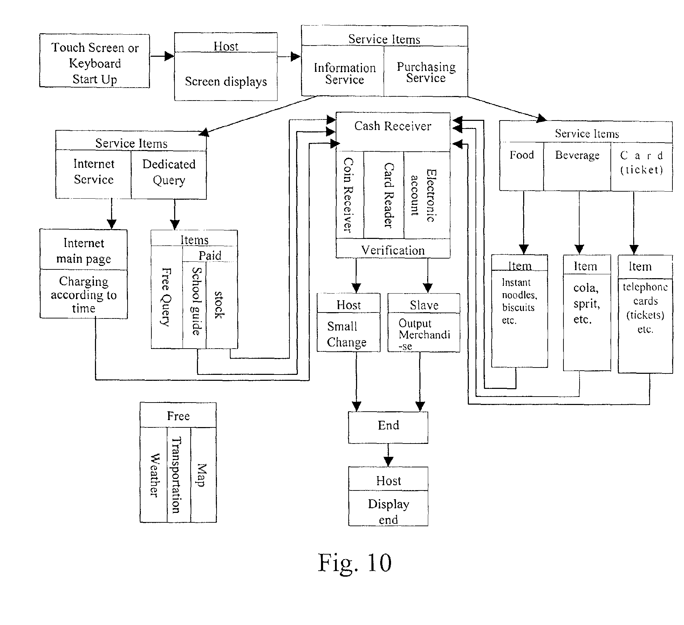

Figure 10 shows that the consumption operation procedure for the customer terminal according to the present invention is: the customer starts up the system using the touch screen or the keyboard of the customer terminal host, two big buttons "information service" and "purchasing service" are immediately displayed on the touch screen display of the customer terminal host, if the button "purchasing service" is touched further, service items are displayed on the screen: "food", "beverages", "card, ticket". If the button "food" is touched further, "instant noodle", "biscuit", "chocolate" etc. will be displayed on the screen; if the button "beverage" is touched, "cola", "sprit", "beer" etc. will be displayed; if "card, ticket" is touched, "IP card", "Shenzhouxing", "IC card" etc. will be displayed. After the customer finally choose the item and touches the touch screen display, the price will be displayed on the screen, the customer performs payment using the cash receiver according to the payment method he chose. When confirmed, the host will give out the change, and the customer can take what he paid for from the corresponding slave of the cabinets constructed by way of building block. For example, if what is purchased is cola, it is collected from the cabinet I; if what is purchased is biscuit, it is collected from the cabinet II; if what is purchased is telephone IC card, it is collected from the cabinet III. The host will in the end display the amount of currency received, the amount that should be paid, and the small change that should be give out, and print out an invoice. The procedure of purchasing terminates hereto; if "information service" button is touched further, "Internet Service", "Special Information Query" will be displayed on the screen. Touching the button "Internet Service" further, Internet web pages will be displayed on the screen and will charge according to the time taken; touching the button "Special Information Query" will display "Free Query", "Paid Query-Guide for Entering a Higher School, Stock". The customer further touches the items displayed on the touch screen, for paid service items, after having paid following the prompt, corresponding information may be obtained. Free query service may provide messages about weather, transportation and map.

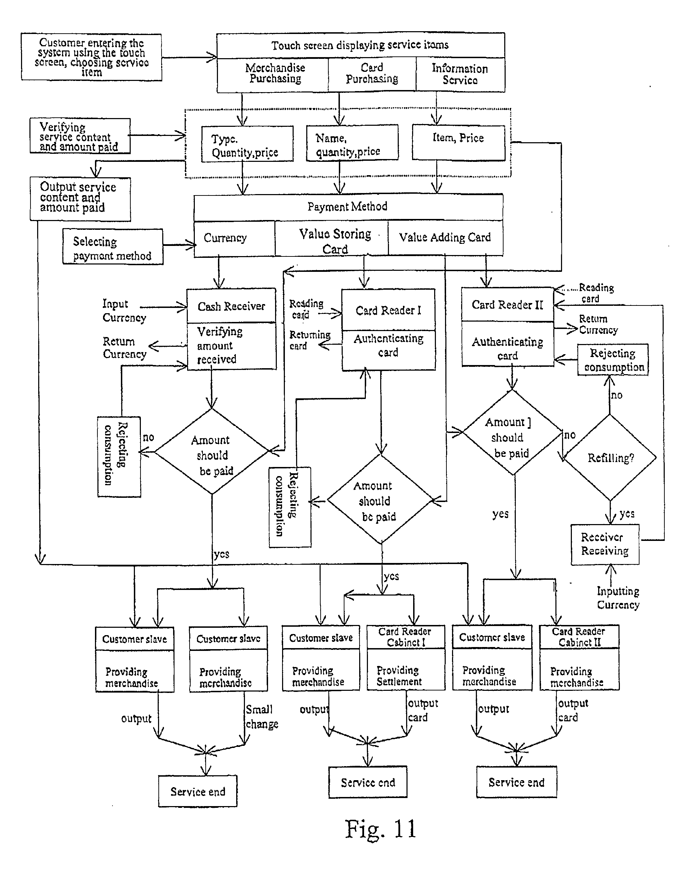

Figure 11 further shows the procedure of payment according to the network system based self-help service according to the present invention. The customer chooses payment method on the customer terminal host, three payment method are listed in this figure: cash payment, value storing card payment and value adding card payment, when cash payment is chosen, the customer input cash to the cash receiver, the cash receiver will check the cash to be sure they are not counterfeit money and count the amount, if the cash have counterfeit money among them, or the amount is less than required, the cash will be returned, the customer terminal will refuse to provide service, when the input cash are not counterfeit money and the amount is equal to or more than required, the customer terminal slave will provide merchandise or provide information service, small change machine will give out small change; when value storing card is chosen to pay for the service, the customer inputs the card in the card reader I, card reader I authenticates the card, if the amount indicated by the card is equal to or more than required, the customer terminal slave provides merchandise or information service, after settlement, the card reader I returns the card, other way, service is refused to be provided; when payment is chosen to be made using value adding card, the customer inputs the card in the value adding card reader II, card reader II authenticates the card, if the amount shown by the card is less than required, and the customer does not refill it or it is not sufficiently refilled, the customer terminal will refuse to provide service, card reader II returns the card, if the amount is more than required after refilling or it is more than required without refilling, the customer terminal provides merchandise or information service using the slave, the card reader returns the card after settlement.

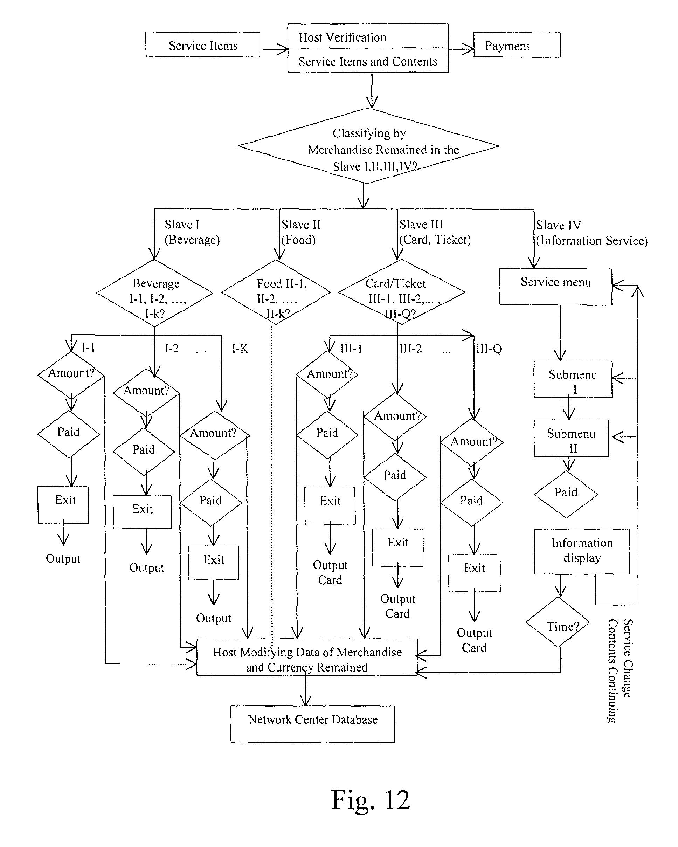

Figure 12 further shows the procedure of the communication control between the customer terminal host and the slave. After a service item and content have been chosen, the terminal host sends a service request message to the communicators and controllers of different slaves through computer bus. Beverage service request message is sent to the slave I, food service request message is sent to the slave II, card and ticket service request is sent to the slave II, information service request message is sent to the slave IV, all terminal slaves further check types and amount of merchandises, and after receiving the instruction sent by the terminal host indicating that the money has been paid, instruct the merchandise output cabinet or display messages, and send the quantity of sold merchandises or the time spent providing information service to the terminal host. The terminal host modifies data about the amount of remained merchandises and currencies, and send modified data to the network management center.

## Claims

1. A network based self-help system, constructed by a network communication system connecting a network management center and a plurality of customer terminals, which is **characterized in that** said network management center in said system is comprised of hardware portions: a network center server, auxiliary PCs or the embedded operation system, network equipment including network cards in server and network cables, and software portions: an information data database, a network management database, an electronic business database, management software, encrypt key authentication and an information safety software package including a firewall or VPN system; said customer terminal is comprised of a customer terminal host and customer terminal slaves, said customer terminal slaves are chosen according to the requirements of the local user and was composed with a plurality of terminal server cabinets constructed in a building block way and providing different service items and contents; said network communication system is comprised of the Internet, a wired and / or wireless local area network and computer buses.

2. A network system based self-help service according to claim 1, **characterized in that** said information data database is comprised of a database storing all kinds of information collected by the system for the local public and an dedicated Internet web site.

3. A network system based self-help service according to claim 1, **characterized in that** said customer terminal host is comprised of a PC host, a touch screen display, a keyboard, a communication and control panel, a communication and control interface connected to said network management center, a communication and control interface connected to all types of cash dispensers in the main cabinet, a communication and control interface connected to every customer terminal slaves, paper currency and coin receiver, a value storing card reader, a value adding card reader, IC card reader or magcard reader, a small change machine, a telephone and / or mobile phone bank payment module, general purpose computer operating software, data management software for said host and said slave, a software system for the communication with said network management center and a software system for the network and data safety maintenance.

4. A network system based self-help service according to claim 1, **characterized in that** said customer terminal slave is comprised of 2∼6 cabinets of dispensers and / or card dispensers and / or information service machines constructed by way of building block, said customer terminal slave may provide 6∼30 service items.

5. A network system based self-help service according to claim 1 or 4, **characterized in that** said dispensers in said customer terminal slaves are food dispensers, beverage dispensers or general merchandise dispensers.

6. A network system based self-help service according to claim 1 or 4, **characterized in that** the card dispenser in the said customer terminal slaves is a ticket dispenser, a card dispenser, or a combination of them.

7. A network system based self-help service according to claim 1 or 4, **characterized in that** said information service machine is an information query machine, a video telephone set, a printer or a photocopier, or a combination of them.

8. An operating method for the network system based self-help service, **characterized in that**:
(1) the customer selecting on the terminal host service contents and payment method;
(2) said terminal host automatically generating terminal information, and transmitting it to the network management center in real time;
(3) upon receiving said terminal information by the network management center, the network management center performing corresponding processing in the information data database, the network management database or in the electronic business database;
(4) said network management center returning said processing results to the terminal host;
(5) said terminal host performing settlement according to the payment method chosen by the customer;
(6) said terminal host communicating with at least one customer terminal slave, in order to control it or them to provide all kinds of services.

9. The method according to claim 8, **characterized in that** said information data database processing in said step (3) comprising the following steps:
(1) said customer selecting information service on the terminal host;
(2) determining payment method;
(3) said terminal host generating an information service request message, and transmitting it to the network management center;
(4) said network management center extracting corresponding information from the information data database, and returning it to the terminal host;
(5) said customer terminal host performing payment according to the payment method selected by the customer;
(6) said terminal slave providing information services.

10. The method according to claim 8, **characterizing in that** said step (3) of network management database procedure further comprising the following steps:
(1) the terminal host generating according to the status of operation of the terminal host terminal information, including merchandises remained, currency remained, merchandise consumption request and operation status message data;
(2) said terminal transmitting the information data generated by the terminal host to the network management center;
(3) said network management center modifying the original data in the network management database, and transmitting the processing results back to the terminal host;
(4) the customer terminal host performing settlement according to the payment method chosen by the customer;
(5) said terminal slave providing merchandise service.

11. The method according to claim 8, **characterized in that** said step (3) of electronic business database processing further comprising the following steps:
(1) the terminal host modifying the messages on the value adding card;
(2) transmitting the value adding card messages modified to the network management center;
(3) said network management performing corresponding modifications to the electronic business database, and transmitting the processing results back to the terminal host;
(4) the terminal host performing settlement;
(5) the terminal slave providing services.

12. The method according to claim 8, **characterized in that** the payment procedure of said step (5) further comprising the following steps:
(1) the customer choosing payment method;
(2) entering the cash payment procedure if cash payment method is chosen;
(3) entering the value storing card payment procedure if value storing card payment method is chosen;
(4) entering the value adding card payment procedure if value adding card payment method is chosen.

13. The method according to claim 12, **characterized in that** said cash payment step comprising:
(1) inputting cash into the cash receiver;
(2) verifying the amount of the currency input;
(3) making sure that the amount of input currency is not less than that should be paid;
(4) the terminal slave providing service and the small change machine giving out small change.

14. The method according to claim 12, **characterized in that** said value storing card payment step comprising:
(1) inputting the card into the value storing card reader;
(2) authenticating the card;
(3) verifying that the amount stored in the card is not less than that should be paid;
(4) performing settlement, outputting the card;
(5) the terminal slave providing service.

15. The method according to claim 12, **characterized in that** said payment step by means of value adding card further comprising:
(1) inputting the card into the value adding card reader;
(2) authenticating the card;
(3) verifying that the amount stored in the card is not less than that should be paid;
(3-1) determining whether to fill value into the card if the amount in the card is less than that should be paid;
(3-2) inputting currency into the cash receiver for value filling, in order that the amount in the card is more than or equal to that should be paid;
(4) performing settlement, outputting the card;
(5) the terminal slave providing services.

16. The method according to claim 8, **characterized in that** the control step of communication between said terminal host (6) and terminal slave comprising:
(1) the terminal slave distributing service request information to different slaves according to service items and contents;
(2) the terminal slave verifying the type and the quantity of the merchandises, and receiving an instruction indicating that payment has been performed and service may be provided;
(3) the terminal slave controlling merchandise output cabinet to output merchandises, and transferring the type and quantity of sold merchandises or the time of the information service takes back to the terminal host;
(4) the terminal host controlling small change machine giving out small change, or the card reader outputting the card;
(5) the terminal host modifying the database for the merchandises remained and the database for the currency remained;
(6) the terminal host sending the modified data to the network management center.
